# EUROPEAN PATENT APPLICATION

(11) **EP 1 925 833 A1**
(43) Date of publication of application: **28.05.2008**
(21) Application number: 06782729.5
(22) Date of filing: 14.08.2006
(51) Int. Cl.: F16C 27/00, B23H 9/00, F01D 25/16, F02C 7/06, F16C 17/02, F16C 19/04, F16C 33/04, F16C 33/14, F16C 33/58, F16C 33/64, F01D 25/00, F02C 7/00

(54) **DAMPER ELEMENT OF BEARING, METHOD OF MANUFACTURING DAMPER ELEMENT, BEARING, AND GAS TURBINE ENGINE**

(30) Priority: 24.08.2005 JP 2005242428
(71) Applicant: IHI Corporation, Tokyo 135-8710 (JP); Kanki, Hiroshi, Kakogawa-shi, Hyogo 675-0057 (JP)
(72) Inventor: KANKI, Hiroshi, Kakogawa-shi Hyogo 675-0057 (JP); SAITO, Shinobu, Tokyo 135-8710 (JP)
(74) Representative: Lamb, Martin John Carstairs
(86) International application number: PCT/JP2006/315995
(87) International publication number: WO 2007/023702

(57) **Abstract**

A damper element of the present invention is applied to a bearing damper element disposed between a rotating object and a supporting object. The damper element includes a slit that is formed between an inner surface and an outer surface of an annulus being supported by the supporting object, and a viscous fluid that is filled in the slit. The slit is extended substantially along a circumferential direction of the annulus. The annulus is, for example, an outer ring or an inner ring of a rolling element bearing, a plane bearing, or a collar that holds a bearing.

## Description

### TECHNICAL FIELD

The present invention relates to a bearing damper element having damping effect (vibration damping property).

This application claims priority on Japanese Patent Application No. 2005-242428, filed August 24, 2005, the contents of which are incorporated herein by reference.

### BACKGROUND ART

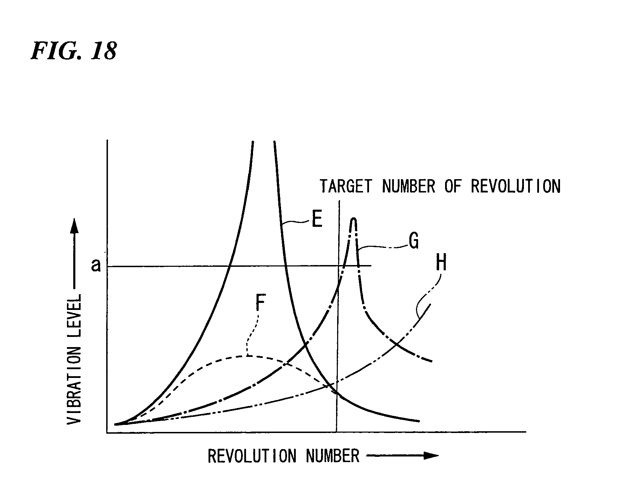

In a configuration in which a rotating shaft is supported by bearings, the structure with the bearings and the rotating shaft will resonate in the characteristic frequency band for the rotating shaft (referring to property "G" shown in FIG. 18), and the sound of vibration sound occur. In addition, in a certain frequency (critical revolution), if the vibration level exceeds the safety value (referring to "a" shown in FIG. 18), the structure may be damaged.

In general, for obtaining the relative safety rotation characteristic indicated by "H" shown in FIG. 18, there is a need to thicken the rotating shaft, or to restrain the revolution frequency of the rotating shaft. If spring members that support the bearings are used for lowering the vibration sound, as shown by property "E" in FIG. 18, since the value of the critical revolution will go down, the structure may be damaged within the target number of revolution. In view of such issues, there is a technology in which a damper element is provided in bearing to damp the vibration level at the resonance frequency band.

As such a damper element, a system is known in which, the outside of a bearing is supported by a collar, a pair of O-rings spaced apart from each other is disposed between the collar and a housing, and a viscous fluid such as oil is filled in a gap formed between the collar and the housing (see, for example, Patent Reference 1). In this system, when the rotating shaft vibrates, the collar is displaced according to the deformation of the O-rings, therefore, the vibration will be damped by the damping effect of the viscous fluid in the gap.

Furthermore, another system is known in which, a cage-shaped holding spring having slots extending in the axial direction and spaced apart from each other in the circumferential direction is supported by a housing, and bearings are elastically supported by the holding spring. In this system, when the rotating shaft rotates, the holding spring is elastically deformed and the vibrations are damped.

Furthermore, another system is known in which, a plurality of elastic pins spaced apart from each other in the circumferential direction are inserted into a collar disposed outside a bearing in the axial direction, and both ends of the elastic pins are attached to a housing and the like. In this system, when the rotating shaft vibrates, the elastic pins are elastically deformed and the vibrations are damped.

Patent Reference 1: Japanese Patent Application, Publication No. S52-15951A

### DISCLOSURE OF INVENTION

### PROBLEMS TO BE SOLVED BY THE INVENTION

A purpose of the present invention is to provide a damper element that can be applied to both large bearings and small bearings, and can achieve a damping effect with a simple structure.

### MEANS FOR SOLVING THE PROBLEM

According to an aspect of the present invention, there is provided a bearing wall element that is disposed between a rotating object and a supporting object, the damper element including: a slit that is disposed between an inner surface and an outer surface of an annulus and is extended substantially along a circumferential direction of the annulus at least over one round, the annulus being supported by the supporting object, one end of the slit being positioned between the inner surface and the outer surface of the annulus, another end of the slit being open at the inner surface or the outer surface of the annulus; and a viscous fluid that is filled in the slit.

The slit can preferably be open at a surface facing the supporting object among the inner surface and the outer surface of the annulus. In other words, in a case in which the rotating object rotates at the medial side of the supporting object, an end of the slit can preferably be open at the outer surface of the annulus, and in a case in which the rotating object rotates at the outer side of the supporting object, an end of the slit can preferably be open at the inner surface of the annulus.

For example, the annulus is an outer ring or an inner ring of a rolling element bearing (e.g., ball bearings, rolling bearings).In this case, an open end of the slit can preferably be formed at the outer surface of the outer ring or the inner surface of the inner ring In other words, for the purpose of reduction of the rotational load and/or prevention of the damage, it is not preferable that the open end of the slit be formed at the raceway surface (the inner surface of the outer ring, the outer surface of the inner ring).

Alternatively, for example, the annulus is a plane bearing. In this case, for the purpose of reduction of the rotational load and/or prevention of the damage, it is preferable that an open end of the slit be not formed at the slip surface of the plane bearing and the open end of the slit be formed at the opposing surface thereof.

Alternatively, for example, the annulus is a collar that is disposed outside or inside a rolling element bearing or a plane bearing (e.g., a collar in which a rolling element bearing or a plane bearing is inserted, or a collar which is inserted in a rolling element bearing or a plane bearing). In this case, an open end of the slit can be formed at the inner surface of the annulus, or the open end of the slit can be formed at the outer surface of the annulus. In addition, in a case in which the rotating object rotates at the medial side of the supporting object, an annulus having the above-described slit can preferably be disposed outside the rolling element bearing or the plane bearing, or in a case in which the rotating object rotates at the outer side of the supporting object, an annulus having the above-described slit can preferably be disposed inside the rolling element bearing or the plane bearing.

According to the damper element of the present invention, the slit and a portion adjacent to the slit act as a mechanical damper element with respect to the vibration of the rotating object.

That is, as the vibration of the rotating object is transmitted to the bearing, the slit and the portion adjacent to the slit of the annulus are displaced or deformed along the radial direction, and the viscous fluid in the slit flows. As a result, the adjacent portion to the slit of the annulus acts as a spring, the resistance of the viscous fluid to the flow is provided, and the vibration of the rotating object will be damped.

Since the slit is extended substantially along the circumferential direction of the annulus over substantially at least one round, the slit can receive the radial vibrations over all around. The round of the slit is not limited to substantially one time around (single line), and can be substantially two times around (double lines) or more. The circumferential extending direction of the slit is not limited to one way from one end toward another end, and the extending direction can be two-way including the circumferential direction from one end toward another end, and a reversed circumferential direction thereof in the way. When the circumferential extending direction of the slit is one way, the cross-section of the slit includes for example a spiral shape (a vortex shape) with a single line or a multiline. When the circumferential extending direction of the slit is two-way, the cross-section of the slit includes for example a U-shape in the way.

The number of slit formed on one annulus can preferably be one for reduction of process cost. However, a plurality of slits can be formed on one annulus. When the slit has a shape extending substantially along the circumferential direction of the annulus substantially over one time around, the sufficient damping effect can be obtained by means of the one slit. When the slit is continuously extended from one end to another end (unicursal), the slit can be formed with a single continuous procedure.

The forming method for the slit can use for example discharge processing or laser processing such as wire cut discharge processing and the like. Since the one end of the slit is disposed between the inner surface and the outer surface of the annulus (within the solid portion) and another end is open at the inner surface or the outer surface of the annulus, the end at the inner surface or the outer surface can be set as a process starting position or a process end position to obtain high workability.

The wire cut discharge processing has advantages such as: facility of formation of the minute slit; elimination of remaining of the process mark such as a burr, a bulge of an edge; high workability; and facility of the fabricating process. By use of the wire cut discharge processing, the slit in the annular can be minutely and precisely formed.

In the wire cut discharge processing, for example, a wire is inserted from the outer surface or the inner surface of the annular. Since the slit is open at the inner surface or the outer surface of the annular, the insertion process can be facile.

When both an attachment position and a detachment position of the wire are at the same position on the outer surface or the inner surface of the annular, additional workability can be obtained.

In this case, the wire, which has been inserted into the annular, can preferably travel along a reverse direction after the formation of the slit and then be detached from the annular. Therefore, the wire cut discharge processing for forming the slit can be executed by a single continuous procedure. In other words, the insertion of the wire into the annulus can be needed at one-time. Accordingly, the automation of the slit forming process can be easily realized, and the process time and/or the process cost can be restrained.

The material for the annulus may only need to have spring characteristics and have any materials such as SUS and the like.

Since a part of the slit opens, the viscous fluid may extrudes out from the slit. Therefore, the viscous fluid may preferably be supplied to the slit as needed. For example, a fluid inlet port being in fluid communication with the slit and via which the viscous fluid is supplied into the slit may preferably be provided on the annulus. Since the width of the slit is relatively minute, the viscous fluid will be extruded out as the width of the sheet shaped slit is narrowed. As the slit returns to the original state, the viscous fluid is suctioned via the fluid inlet port, therefore, the filling state is returned to the original.

A sealing member may preferably be disposed adjacent to an open end of the slit and suppresses the outflow of the viscous fluid. Since the outflow of the viscous fluid from the slit is suppressed by the sealing member, the resistance of the viscous fluid to the flow is increased. As a result, the damping force can be strengthened.

The annulus may only need to have a substantially tubular shape, at least one of the axial sides of which is opened, and have any shapes. For example, the annulus can have polygon contours of both the inner surface and the outer surface. One of the outer surface and the inner surface can have a corrugated contour, a circular contour, or a polygon contour. Based on the fact that the annulus is typically applied to for example an annulus bearing or a rotating shaft, the annulus may preferably be cylindrical. In manufacturing, the cylindrical annuls may preferably have a slit the both axial ends of which are opened.

The width of the slit may need to be relatively minute, and is preferably set according to the size, material, and spring characteristics of the annulus, properties (e.g., viscosity) of the viscous fluid, vibration frequency and amplitude of the damping target, and the like. According to the experiments by the inventor and others, it is confirmed that the width is set to preferably be 0.5 mm or less from a practical standpoint or more preferably be 0.2 mm or less. If the width of the slit exceeds 0.5 mm, there is a possibility that the viscous fluid will be extruded at any time and the expected damping effect can not be obtained.

The damper element for bearing of the present invention is favorably applied to an apparatus having a rotating object with high-speed rotation such as gas-turbine engine.

### EFFECTS OF THE INVENTION

According to a bearing damper element of the present invention, by means of a simple structure in which a slit extending in the circumferential direction is provided on an annular disposed between a rotating object and a supporting object, the damping effect can be obtained and the structure can be favorably applied to both large bearings and small bearings.

### BRIEF DESCRIPTION OF THE DRAWINGS

FIG. 1 is a sectional view showing an embodiment in which a damper element according to the present invention is applied to an outer ring of a rolling element bearing.
FIG. 2 is a perspective view showing the outer ring on which a slit is formed.
FIG. 3 is a side view showing the outer ring shown in FIG. 2.
FIG. 4 shows an example of a fabricating method of the outer ring with damper element.
FIG 5 shows another embodiment of the slit.
FIG. 6 shows another embodiment of the slit.
FIG. 7 shows another embodiment of the slit.
FIG. 8A shows another embodiment in which a plurality of slits are formed on the outer ring.
FIG. 8B shows another embodiment in which a plurality of slits are formed on the outer ring.
FIG. 8C shows another embodiment in which a plurality of slits are formed on the outer ring.
FIG. 8D shows another embodiment in which a plurality of slits are formed on the outer ring.
FIG. 8E shows another embodiment in which a plurality of slits are formed on the outer ring.
FIG. 8F shows another embodiment in which a plurality of slits are formed on the outer ring.
FIG. 9 shows another embodiment of a rolling element bearing having damper element.
FIG. 10 shows another embodiment of a rolling element bearing having damper element.
FIG 11 shows another embodiment of a rolling element bearing having damper element.
FIG. 12 is a sectional view showing an embodiment in which a damper element according to the present invention is applied to an inner ring of a rolling element bearing.
FIG. 13 is a perspective view showing the inner ring on which a slit is formed.
FIG. 14 is a side view showing the inner ring shown in FIG. 13.
FIG 15 is a sectional view showing an embodiment in which a damper element according to the present invention is applied to a plane bearing.
FIG. 16 is a sectional view showing an embodiment in which a damper element according to the present invention is applied to a collar that holds a bearing.
FIG 17 schematically shows an embodiment of a gas-turbine engine according to the present invention.
FIG 18 is a figure for explanation of damping effect.

### DESCRIPTION OF THE REFERENCE SYMBOLS

10 : rotating shaft(rotating object), 20 : rolling element bearing, 21 : inner ring (annulus), 22 : outer ring(annulus), 31 : slit, 31a : one end of slit (first end), 31b : another end of slit (second end), 32 : oil inlet port, 33 : oil supply conduit, 40 : housing(supporting object), 41 : oil supply passage, 45 : searing member, 50 : plane bearing(annulus), 60 : collar(annulus), 110 : spindle(supporting object), 140 : rotating object.

### BEST MODE FOR CARRYING OUT THE INVENTION

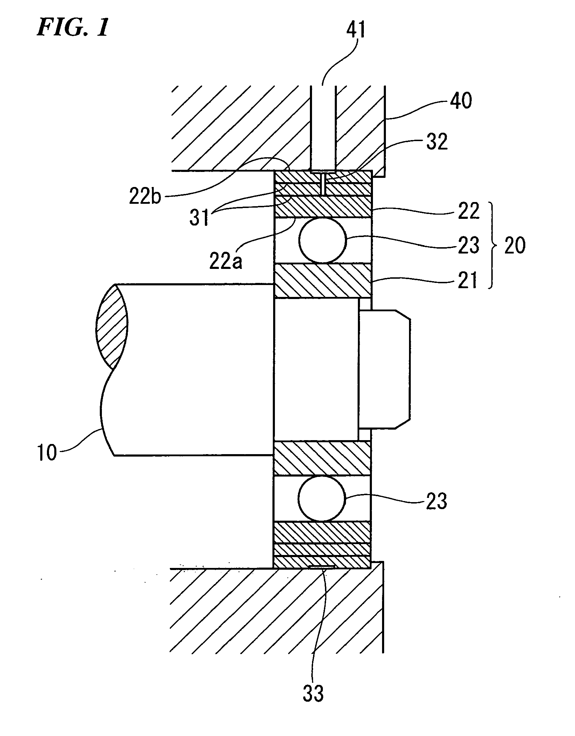

The following explains the embodiments of the present invention, with reference to the drawings. FIG 1, FIG. 2, and FIG. 3 show preferred embodiments according to the present invention.

As shown in FIG 1, a rotating shaft 10 is rotatably supported by a rolling element bearing (a ball bearing) 20. The rolling element bearing 20 is inserted and held in a housing (attachment base) 40.

The rolling element bearing 20 includes an inner ring 21, an outer ring 22, and balls 23. A slit 31 having a minute width (e.g., 0.2 mm) is formed between an inner surface (a raceway surface) 22a and an outer surface 22b of the outer ring 22 (i.e., within a solid portion, or within the thickness of the outer ring).

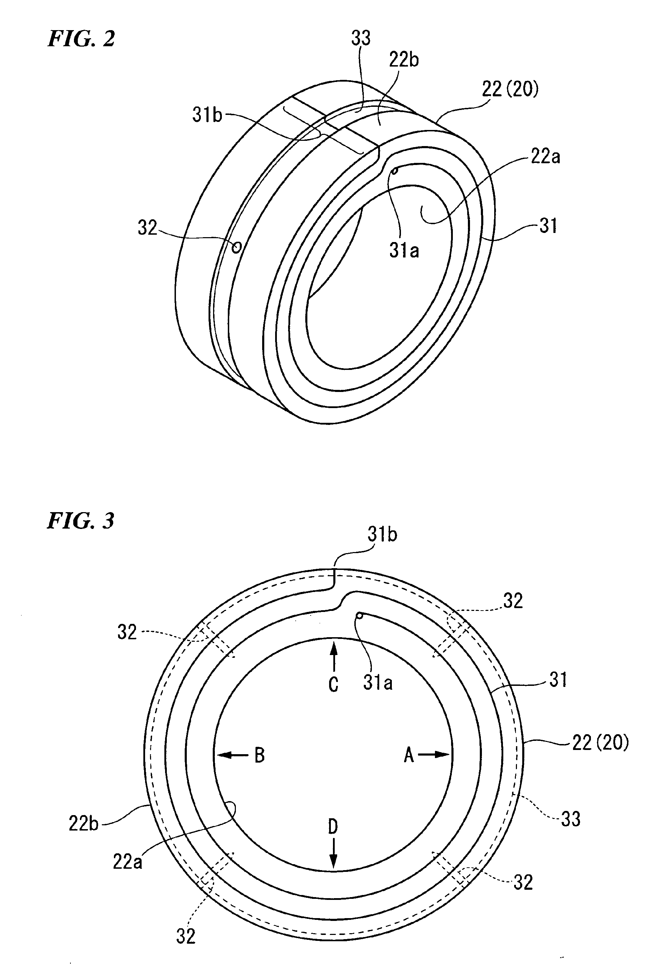

As shown in FIGS. 2 and 3, the slit 31 is continuously extended substantially along the circumferential direction of the outer ring 22 over substantially two times around, and has a sheet formation extending over the entire length in the axial direction of the outer ring 22. Specifically, the slit 31 has a substantially spiral shape (a vortex shape) with two-times around as viewed from the side of the outer ring 22. One end (a first end) 31 a of the slit 31 is arranged between the inner surface 22a and the outer surface 22b of the outer ring 22 (i.e., within the solid portion, or within the thickness of the outer ring). Another end (a second end) 31b of the slit 31 is open at the outer surface 22b of the outer ring 22. The slit 31 imparts spring characteristics to the outer ring 22, especially to the portion adjacent to the slit 31.

In FIG. 1, an oil supply passage 41, which is in fluid communication with an oil supply means (not shown in Figure), is formed in the housing 40. An oil supply conduit 33 is formed on the outer surface 22b of the outer ring 22 over the entire area in the circumferential direction. A plurality of oil inlet ports 32 are provided in the oil supply conduit 33 and disposed at substantially equal angle apart. The oil inlet ports 32 respectively have a depth that is from the base point on the outer surface 22b of the outer ring 22 and reaches the slit 31. Oil (viscous fluid) is supplied to the slit 31 via the oil supply passage 41, the oil supply conduit 33, and the oil inlet ports 32. The slit 31 is filled with the oil.

In the case in which the oil inlet port(s) 32 is formed so as to reach the inner surface 22a of the outer ring 22, the oil from the oil inlet port(s) 32 can also be used as lubricant agent for the rolling element bearing 20. In this case, the opening(s) of the oil inlet port(s) 32 formed on the inner surface 22a of the outer ring 22 are preferable disposed at a position that does not contact with the balls 23.

Here, the damper element comprises the slit 31 that is formed in the outer ring 22, the oil inlet ports 32, the oil, and the like.

Next, the following explains the working of the damper element comprising the slit 31 formed in the outer ring 22.

There is a case in which, as the rotating shaft 10 is rotated, vibrations of the rotating shaft 10 and the rolling element bearing 20, which are attributable to the processing accuracy thereof and the like, may be generated. In the rolling element bearing 20 with the outer ring 22 (especially, the adjacent portion to the slit 31) having spring characteristics, as the vibrations in a particular radial direction (for example, the direction indicated by the arrow A shown in FIG 3) are transmitted to the outer ring 22, the portion of the outer ring 22 adjacent to the slit 31 is elastically deformed against the spring force and the width of the slit 31 narrows in the radial direction.

As the width of the slit 31 partially narrows, the oil in the slit 31 at the part moves, and part of the oil is extruded out from the slit 31. At this time, the outer ring 22 (especially, the portion adjacent to the slit 31) acts as a spring, and a resistance to the flow is provided by the oil. As a result, the vibrations of the rotating shaft 10 and the rolling element bearing 20 are substantially attenuated (referring to property "F" shown in FIG. 18). This is confirmed by the use of the damper element which has been manufactured experimentally by the inventor and others.

As the outer ring 22 receives the vibrations along a direction (the direction indicated by the arrow B shown in FIG 3) opposite to the above-described radial direction (the direction indicated by the arrow A shown in FIG. 3), the vibrations at the part indicated by "B" are damped according to the act as described above. Furthermore, the part of the slit 31 indicated by "A" reverts to the original state with the spring force. As the width of the slit 31 partially expands, the oil in the oil supply conduit 33 is suctioned off via the oil inlet ports 32 and filled into the slit 31.

In addition, the oil from the oil supply passage 41 is provided to the oil supply conduit 33 as required.

The same act described above also applies to the radial vibrations at the other parts, for example, indicated by the arrow "C" and "D" in FIG. 3. In other words, the number of the slit 31 formed in the outer ring 22 is one, and the slit 31 is continuously extended substantially along the circumferential direction of the outer ring 22 over substantially two times around. Then the slit 31 receives the radial vibrations over all around, and sufficient damping effect can be obtained.

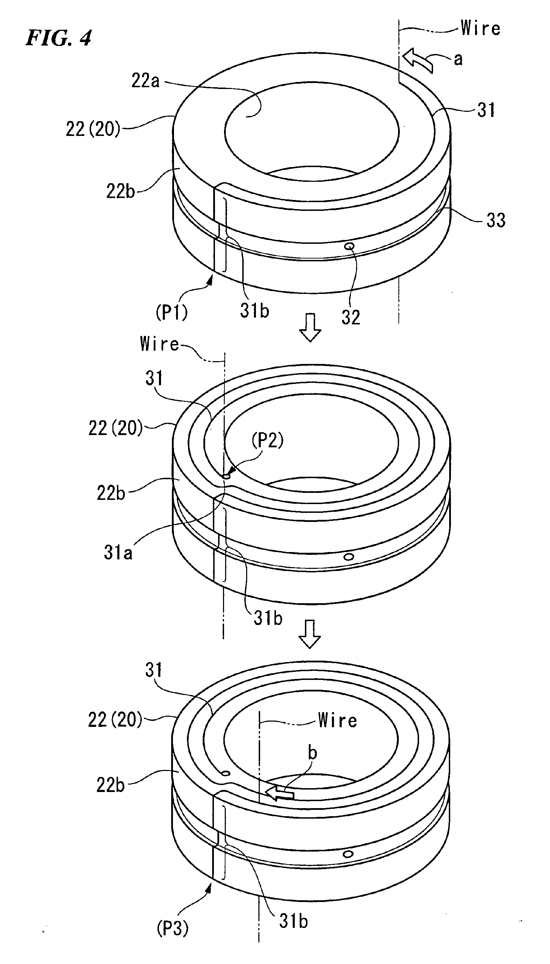

FIG. 4 shows an example of the fabricating method of the outer ring 22 with the above-described damper element.

In this case, the slit 31 is formed on the outer ring 22 by means of wire cut discharge processing. That is, in the processing, electricity is supplied to a metal wire (e.g., a copper wire), a discharge process is performed in ionic liquid or in oil, and the molecules of the processed material are destroyed. By relative movement between the outer ring 22 and the wire, the slit 31 is formed in the outer ring 22. Alternatively, the slit 31 can be formed by means of the other method than the wire cut discharge processing, for example, by means of laser processing.

The wire cut discharge processing has advantages such as: facility of formation of the minute slit; elimination of remaining of the process mark such as a burr, a bulge of an edge; high workability; and facility of the fabricating process. By use of the wire cut discharge processing, the slit 31 in the outer ring 22 can be minutely and precisely formed.

At first, the outer ring 22 is arranged so that the axis line thereof is parallel to the wire. One position on the outer surface 22b of the outer ring 22 is determined as a process starting position P1, and the wire is inserted into the outer ring 22. This insertion process can be finished with only the relative movement between the outer ring 22 and the wire, so it is facile. Next, the wire is moved along the circumferential direction (indicated by the arrow "a" shown in FIG. 4) of the outer ring 22, and then a slit 31 having a sheet formation is formed in the outer ring 22. The position (the process starting position P1) at which the wire is inserted into the outer ring 22 is to be a second end 31b of the slit 31.

The wire is moved with respect to the outer ring 22 along the circumferential direction substantially over two rounds, suitably along with a movement of the wire along the inwardly radial direction. When the wire reaches a predetermined position (an intermediate position P2), the movement direction of the wire is reversed. The wire is moved along the reversed direction (indicated by the arrow "b" shown in FIG. 4) from the previous direction. At this time, the wire moving along the reversed circumferential direction passes through the inside of the slit 31 previously formed in the outer ring 22. The reversed position (the intermediate position P2) of the wire is to be a first end 31a of the slit 31.

The wire moves along the reversed circumferential direction after the reversal, through the slit 31 previously formed in the outer ring 22, and then the wire is detached from the slit 31 at the second end 31b (a process end position P3).

By means of the aforementioned steps, the slit 31 which has a substantially spiral shape with two rounds is formed in the outer ring 22.

In the above-described slit forming process, both the attachment position (the process starting position P1) and the detachment position (the process end position P3) of the wire are at the same position on the outer surface 22b of the outer ring 22, and the operations of the attachment and the detachment of the wire are facile. In other words, the attachment and the detachment of the wire can be finished with only the relative movement between the outer ring 22 and the wire, so the automation thereof can be easily realized and the programming for the movement can be simplified.

Furthermore, in the process, the wire, which has been inserted into the outer ring 22, moves through the slit 31 along the reversed direction after the formation of the slit 31 and is detached form the outer ring 22. Therefore, the slit forming process is continuously performed, and the attachment operation of the wire to the outer ring 22 is one-time-only. Accordingly, the automation of the slit forming process can be easily realized, and the process time and/or the process cost can be restrained.

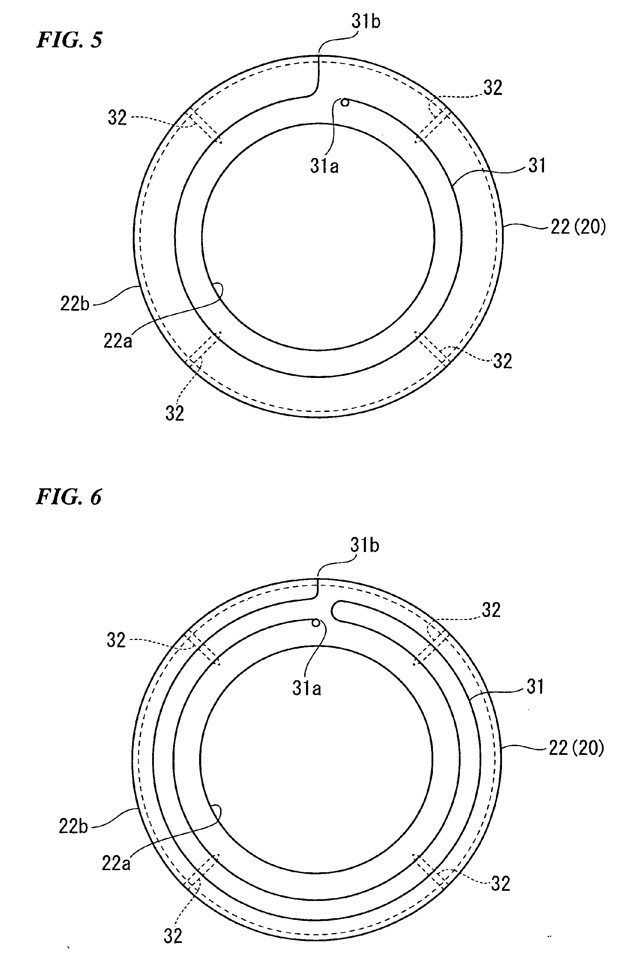

FIG. 5, FIG. 6, and FIG. 7 show other embodiments of the slit 31 formed in the outer ring 22.

The characteristics such as spring characteristics and the like can be changed according to the various figures of the slit 31. In each of the FIGS. 5 to 7, components the same as or similar to those shown in FIGS. 1 to 3 are denoted the same reference symbols, and description thereof is simplified or omitted.

In FIG. 5, the slit 31 is continuously extended substantially along the circumferential direction of the outer ring 22 over substantially one time around, and has a substantially spiral shape (a vortex shape) with one line as viewed from the side of the outer ring 22. One end (a first end) 31 a of the slit 31 is arranged between the inner surface 22a and the outer surface 22b of the outer ring 22 (i.e., within the solid portion, or within the thickness of the outer ring), and another end (a second end) 31b of the slit 31 is open at the outer surface 22b of the outer ring 22.

In FIG. 6, the slit 31 has a figure with a U-shaped curve (a hairpin bend) as viewed from the side of the outer ring 22. In other words, the slit 31 includes an extension along one circumferential direction substantially over one time around, a reversal in the way, and another extension along a reversed direction substantially over one time around, and is continuously extended from one end (a first end) 3 1 a toward another end (a second end) 31b in at least the two directions substantially along the circumferential direction of the outer ring 22. The first end 31 a is arranged between the inner surface 22a and the outer surface 22b of the outer ring 22 (i.e., within the solid portion, or within the thickness of the outer ring), and the second end 31b is open at the outer surface 22b of the outer ring 22.

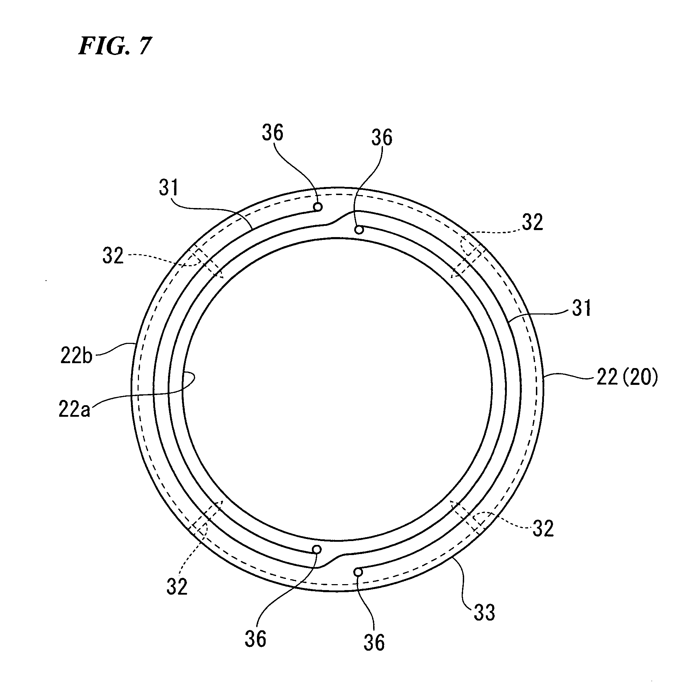

In FIG. 7, the slit 31 includes two slits 31 between the inner surface 22a and the outer surface 22b of the outer ring 22. Each of the slits 31 is extended substantially along the circumferential direction of the outer ring 22 substantially over one time around, both ends of which are located between the inner surface 22a and the outer surface 22b of the outer ring 22 (i.e., within the solid portion, or within the thickness of the outer ring). Furthermore, each of the slits 31 is open at the side surface of the outer ring 22.

At both ends of each slit (making up slit 31), circular holes 36 each having diameter larger than the width of the slit 31 are provided extending over the entire length in the axial direction. The circular holes 36 are used as holes through which the wire is inserted when forming the slit 31 using wire cut discharge processing, and have the function of preventing crack formation at the end portions of the slit 31 after processing.

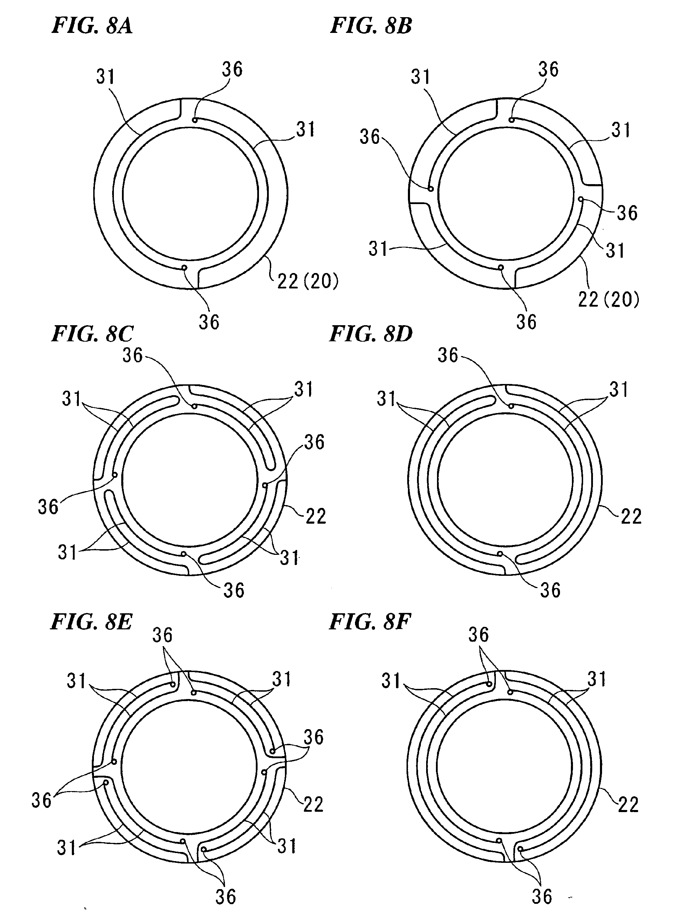

FIGS. 8A to 8F show other embodiments in which a plurality of slits 31 are formed on the outer ring 22.

Each of the embodiments shown in FIGS. 8A and 8B comprises a plurality of (two or four) slits 31. One end of the slit is between the inner surface and the outer surface of the outer ring 22 (i.e., within the solid portion, or within the thickness of the outer ring), and another end is open at the outer surface of the outer ring 22. The combination of slits 31 basically forms a single round slit extending around the outer ring 22.

Each of the embodiments shown in FIGS. 8C and 8D comprises a plurality of (two or four) slits 31 each having a U-shaped curve as viewed from the side of the outer ring 22. Each slit 31 includes an extension along one circumferential direction, a reversal in the way, and another extension along a reversed direction, and continuously extends from one end (a first end) toward another end (a second end) in at least the two directions. The combination of slits 31 basically forms a double round slit extending all around the outer ring 22. Furthermore, in each slit 31, the first end is located between the inner surface and the outer surface of the outer ring 22 (i.e., within the solid portion, or within the thickness of the outer ring), and the second end is open at the outer surface of the outer ring 22.

Each of the embodiments shown in FIGS. 8E and 8F comprises a plurality of (four or eight) slits 31. One end of the slit is located between the inner surface and the outer surface of the outer ring 22 (i.e., within the solid portion, or within the thickness of the outer ring), and another end is open at the outer surface of the outer ring 22. The slits 31 comprise a plurality of pairs each of which includes slits separated from each other arranged at medial side or lateral side of the outer ring 22. The combination of slits 31 substantially forms a double round slit extending all around the outer ring 22.

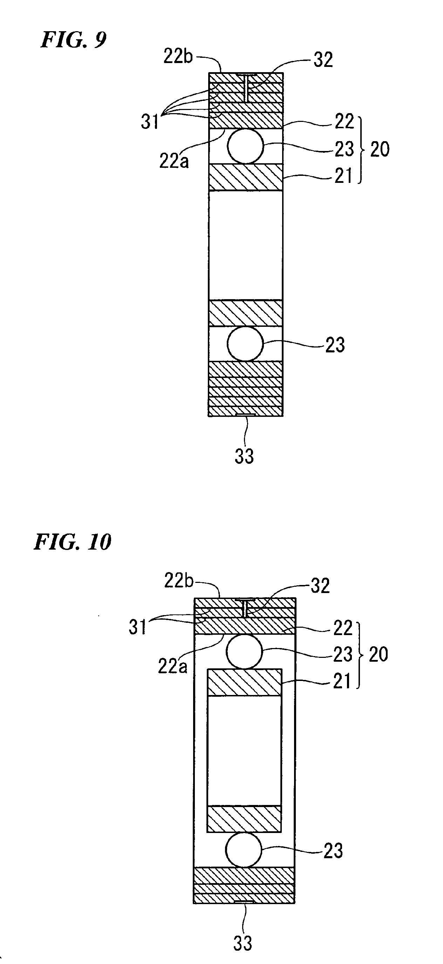

FIG. 9, FIG 10, and FIG. 11 respectively show another embodiment of a rolling element bearing having a damper element. In each of the FIGS. 9 to 11, components the same as or similar to those shown in FIGS. 1 to 3 are denoted using the same reference symbols, and the description thereof is simplified or omitted.

In FIG 9, a rolling element bearing 20 has an outer ring 22 in which the slit 31 is formed, and the radial thickness of which is greater than that of an inner ring 21. In this embodiment, the slit 31 can be easily formed and applied to various figures such as the slit 31 with multiline. As a result, for example, by controlling the spring characteristics thereof, the damping effect thereof can be enhanced.

In FIG 10, a rolling element bearing 20 has an outer ring 22 in which a slit 31 is formed, and the axial length of which is greater than that of an inner ring 21. In this embodiment, by increasing the circumferential dimension of the slit 31, the damping effect can be enhanced.

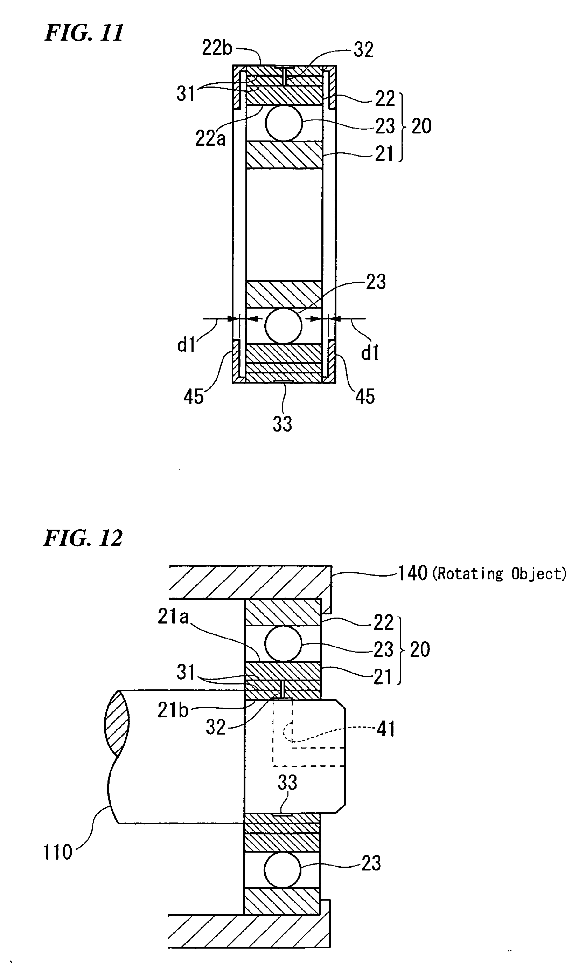

In FIG. 11, a rolling element bearing 20 has a sealing member 45 adjacent to the side surface of the outer ring 22. The sealing member 45 can be provided as a part of the rolling element bearing 20, or can be provided attached to the other object (i.e., the housing). A minute gap "d1" is provided between the sealing member 45 and the side surface of the outer ring 22. In this embodiment, by means of the sealing member 45, an outflow of the oil (viscous fluid) can be suppressed from the open end of the side portion of the slit 31. As a result of increasing the resistance of the oil to the flow, the damping force can be strengthened.

FIG. 12, FIG. 13, and FIG. 14 respectively show an embodiment in which the damper element according to the present invention is applied to an inner ring of a rolling element bearing. In each of the FIGS. 12 to 14, components the same as or similar to those shown in FIGS. 1 to 3 are denoted using the same reference symbols, and the description thereof is simplified or omitted.

As shown in FIG 12, a rotating object 140 is rotatably supported by a rolling element bearing (a ball bearing) 20. The rolling element bearing 20 is inserted and held in a spindle (attachment base) 110. A slit 31 having a minute width (e.g., width of 0.2 mm) is formed between an inner surface 21a and an outer surface (a raceway surface) 21b of the inner ring 21 of the rolling element bearing 20 (i.e., within solid portion, or within the thickness of the inner ring).

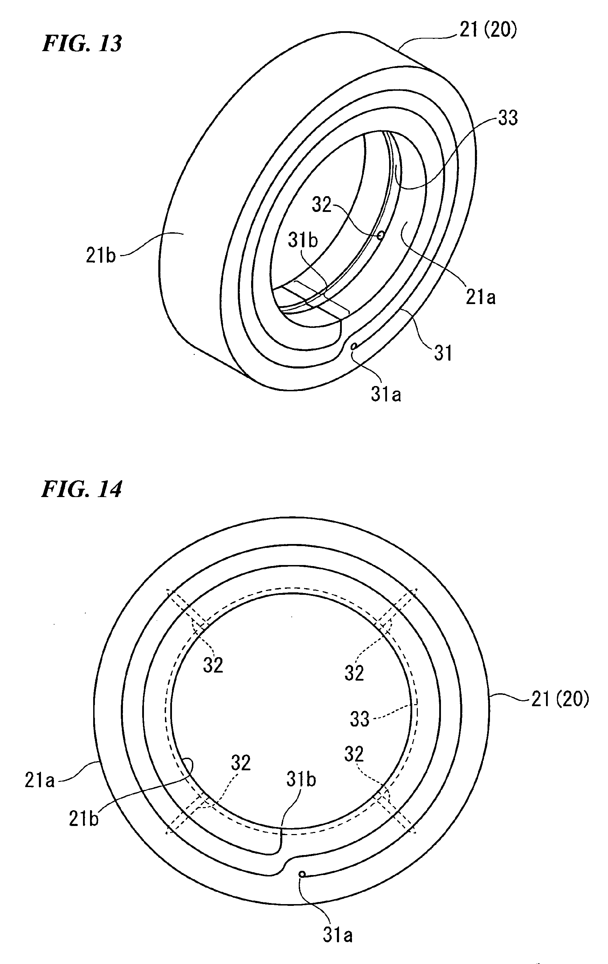

As shown in FIGS. 13 and 14, the slit 31 is continuously extended substantially along the circumferential direction of the inner ring 21 over substantially two rounds, and has a sheet formation extending over the entire length in the axial direction of the inner ring 21. Specifically, the slit 31 has a substantially spiral shape (a vortex shape) going two times around as viewed from the side of the outer ring 21. One end (a first end) 31a of the slit is arranged between the inner surface 22a and the outer surface 22b of the inner ring 21 (i.e., within the solid portion, or within the thickness of the inner ring). Another end (a second end) 31b is open at the inner surface 21a of the inner ring 21. The slit 31 imparts spring characteristics to the inner ring 21, especially to the portion adjacent to the slit 31.

In FIG. 12, an oil supply passage 41, which is in fluid communication with an oil supply means (not shown in Figure), is formed in the spindle 110. An oil supply conduit 33 is formed on the inner surface 21a of the inner ring 21 over the entire area in the circumferential direction. A plurality of oil inlet ports 32 are provided in the oil supply conduit 33 and disposed substantially equal angles apart. The oil inlet ports 32 respectively have a depth that extends from the base point on the inner surface 21a of the inner ring 21 and reaches the slit 31.Oil (viscous fluid) is supplied to the slit 31 via the oil supply passage 41, the oil supply conduit 33, and the oil inlet ports 32. The slit 31 is filled with the oil.

When the oil inlet port(s) 32 are formed so as to reach the inner surface 21a of the inner ring 21, the oil from the oil inlet port(s) 32 can also be used as lubricant agent for the rolling element bearing 20. In this case, the opening(s) of the oil inlet port(s) 32 formed on the inner surface 21a of the inner ring 21 are preferable disposed at a position that does not contact with the balls 23.

Here, the damper element comprises the slit 31 that is formed in the inner ring 21, the oil inlet ports 32, the oil, and the like.

In the damper element having the slit 31 formed in the inner ring 21, as the vibrations from the rotating object 140 are transmitted to the rolling element bearing 20, the portion of the inner ring 21 adjacent to the slit 31 is elastically deformed against the spring force and the width of the slit 31 narrows in the radial direction. As the width of the slit 31 partially narrows, the oil in the slit 31 at the part moves, and a part of the oil is extruded out from the slit 31. At this time, the inner ring 21 (especially, the portion adjacent to the slit 31) acts as a spring, and the resistance to the flow is provided by the oil. As a result, the vibrations of the rotating object 140 and the rolling element bearing 20 are substantially damped. As the width of the slit 31 partially changes, the oil in the oil supply conduit 33 is suctioned off via the oil inlet ports 32 and suitably filled into the slit 31.

As described above, in the configuration in which the rotating object 140 rotates at the outer side of the supporting object (the spindle 110), by providing the slit 31 in the inner ring 21 which is as the side fixed to the supporting object, the damping effect can be obtained.

The configuration of the slit 31 formed in the inner ring 21 of the rolling element bearing 20 can be applied to various figures such as the embodiments regarding the slit 31 of the outer ring 22 shown in FIG 5 to 8F. However, for the purpose of reduction of the rotational load and/or the prevention of the damage, the open end of the slit 31 is preferably not formed at the outer surface 21 b, which is used as the raceway surface, of the inner ring 21. The open end of the slit 31 is preferably formed at the side surface and the inner surface 21 a of the inner ring 21.

Furthermore, in the rolling element bearing 20 having the inner ring 21 in which the slit 31 is formed, the radial thickness of the inner ring 21 can be greater than that of the outer ring 22 as well as the modified configurations regarding to the outer ring 22 shown in FIGS. 9 to 11. In addition, the axial length of the inner ring 21 can be greater than that of the outer ring 22. In addition, a sealing member can be disposed adjacent to the side surface of the inner ring 21.

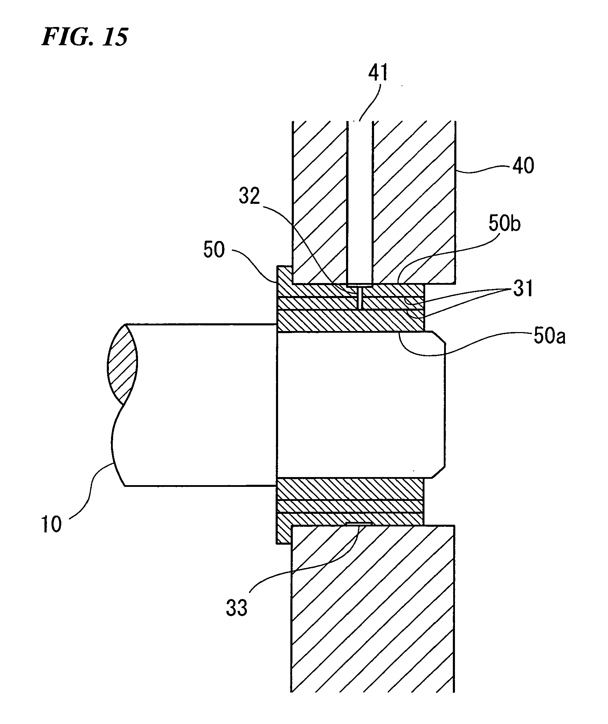

FIG. 15 shows an embodiment in which the damper element according to the present invention is applied to a plane bearing. In the FIG. 15, components the same as or similar to those shown in FIGS. 1 to 3 are denoted using the same reference symbols, and the description thereof is simplified or omitted.

As shown in FIG 15, a rotating shaft 10 is rotatably supported by a plane bearing 50. The plane bearing 50 is inserted and held in a housing (attachment base) 40. The slit 31 having a minute width (e.g., width of 0.2 mm) is formed between an inner surface (a slip surface) 50a and an outer surface 50b of the plane bearing 50 (i.e., within solid portion, or within the thickness).The configuration of the slit 31 can be applied to various figures such as the embodiments described above. The slit 31 imparts spring characteristics to the plane bearing 50, especially to the portion adjacent to the slit 31.

An oil supply passage 41, which is in fluid communication with an oil supply means (not shown in Figure), is formed in the housing 40. An oil supply conduit 33 is formed on the outer surface 50b of the plane bearing 50 over the entire area in the circumferential direction. A plurality of oil inlet ports 32 are provided in the oil supply conduit 33 and disposed at substantially equal angles apart. The oil inlet ports 32 respectively have a depth that extends from the base point on the outer surface 50b of the plane bearing 50 and reaches the slit 31. Oil (viscous fluid) is supplied to the slit 31 via the oil supply passage 41, the oil supply conduit 33, and the oil inlet ports 32. The slit 31 is filled with the oil.

When the oil inlet port(s) 32 is formed so as to reach the inner surface 50a of the plane bearing 50, the oil from the oil inlet port(s) 32 can also be used as a lubricating agent for the plane bearing 50.

Here, the damper element comprises the slit 31 that is formed in the plane bearing 50, the oil inlet ports 32, the oil, and the like.

In the damper element having the slit 31 formed in the plane bearing 50, as the vibrations from the rotating shaft 10 are transmitted to the plane bearing 50, the portion adjacent to the slit 31 is elastically deformed against the spring force and the width of the slit 31 narrows in the radial direction. As the width of the slit 31 partially narrows, the inner oil of the part moves, and a part of the oil is extruded out from the slit 31. At this time, the plane bearing 50 (especially, the portion adjacent to the slit 31) acts as a spring, and the resistance to the flow is provided by the oil. As a result, the vibrations of the rotating shaft 10 are substantially attenuated. As the width of the slit 31 partially changes, the oil in the oil supply conduit 33 is suctioned via the oil inlet ports 32 and suitably filled into the slit 31.

As described above, by providing the slit 31 in the plane bearing 50, the damping effect can be obtained.

For the purpose of reduction of the rotational load and/or prevention of the damage, the open end of the slit 31 is preferably not formed at the inner surface 50a, which is as the slip surface, of the plane bearing 50. The open end of the slit 31 is preferably formed at the side surface and the outer surface 50b of the plane bearing 50. The oil can be used as lubricating agent and can be provided to the slip surface by use of the open end of the slit 31.

Alternatively, in the embodiment shown in FIG. 12 in which the rotating object 140 rotates at the outer side of the supporting object (the spindle 110), the rolling element bearing 20 can be replaced with the plane bearing in which the slit is formed. In this case, for the purpose of reduction of the rotational load and/or prevention of the damage, the open end of the slit is preferably not formed at the outer surface, which is as the slip surface, of the plane bearing. The open end of the slit is preferably formed at the side surface and the inner surface of the plane bearing.

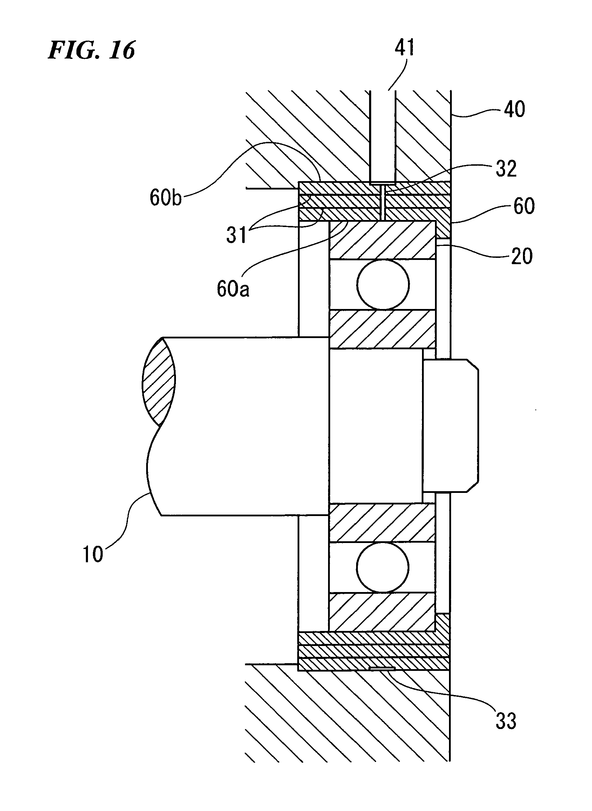

FIG. 16 shows an embodiment in which the damper element according to the present invention is applied to a collar 60 that holds a bearing. In the FIG. 16, components the same as or similar to those shown in FIGS. 1 to 3 are denoted using the same reference symbols, and the description thereof is simplified or omitted.

As shown in FIG. 16, a rotating shaft 10 is rotatably supported by a rolling element bearing 20. The rolling element bearing 20 is inserted into a collar 60. The collar 60 is inserted and held in a housing (attachment base) 40. The slit 31 having a minute width (e.g., width of 0.2 mm) is formed between an inner surface 60a and an outer surface 60b of the collar 60 (i.e., within the solid portion, or within the thickness).The configuration of the slit 31 can be applied to various figures such as the embodiments described above. The slit 31 imparts spring characteristics to the collar 60, especially to the portion adjacent to the slit 31.

An oil supply passage 41, which is in fluid communication with an oil supply means (not shown in Figure), is formed in the housing 40. An oil supply conduit 33 is formed on the outer surface 60b of the collar 60 over the entire area in the circumferential direction. A plurality of oil inlet ports 32 are provided in the oil supply conduit 33 and disposed at substantially equally angular space apart. The oil inlet ports 32 respectively have a depth that extends from the base point on the outer surface 60b of the collar 60 and reaches the slit 31. In this case, the oil inlet port(s) 32 is formed so as to reach the inner surface 22a of the collar 60, therefore, the oil from the oil inlet port(s) 32 can also be used as lubricant agent for the rolling element bearing 20.Oil (viscous fluid) is supplied to the slit 31 via the oil supply passage 41, the oil supply conduit 33, and the oil inlet ports 32. The slit 31 is filled with the oil.

Here, the damper element comprises the slit 31 that is formed in the collar 60, the oil inlet ports 32, the oil, and the like.

In the damper element having the slit 31 formed in the collar 60, as the vibrations from the rotating shaft 10 are transmitted to the collar 60, the portion adjacent to the slit 31 is elastically deformed against the spring force and the width of the slit 31 narrows in the radial direction. As the width of the slit 31 partially narrows, the inner oil at the part moves, and a part of the oil is extruded out from the slit 31. At this time, the collar 60 (especially, the portion adjacent to the slit 31) acts as a spring, and the resistance to the oil is provided by the oil. As a result, the vibrations of the rotating shaft 10 are substantially damped. As the width of the slit 31 partially changes, the oil in the oil supply conduit 33 is suctioned off via the oil inlet ports 32 and suitably filled into the slit 31.

As described above, by providing the slit 31 in the collar 60, the damping effect can be obtained.

In the embodiment in which the slit 31 is provided on the collar 60, the open end of the slit 31 can be formed at the inner surface 60a of the collar 60, or the open end of the slit 31 can be formed at the outer surface 60b of the collar 60.

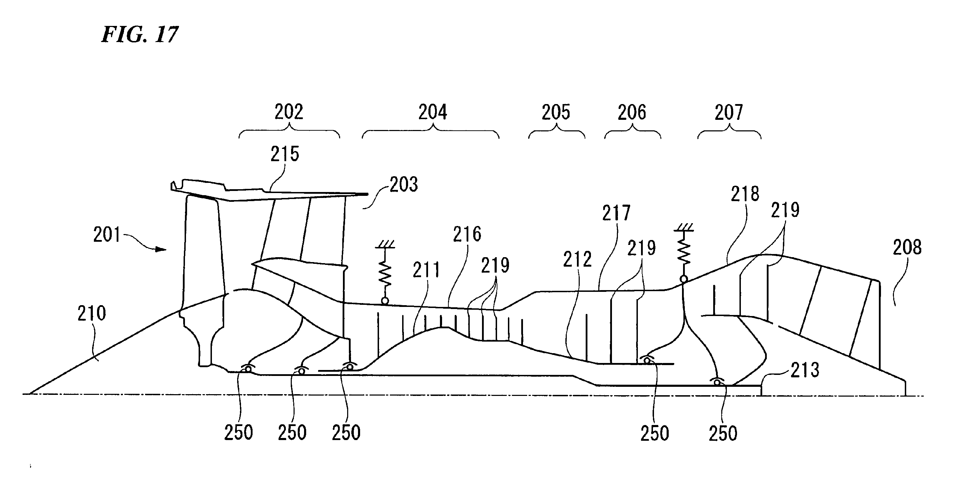

FIG. 17 schematically shows an embodiment of a gas-turbine engine. The gas-turbine engine (turbo-fan engine) includes, for example, an air intake 201, a fan/low-pressure compressor 202, an exhaust fan duct 203, a high-pressure compressor 204, a combustion chamber 205, a high-pressure turbine 206, a low-pressure turbine 207, and an exhaust duct 208.

Each of the fan/low-pressure compressor 202, high-pressure compressor 204, high-pressure turbine 206, and low-pressure turbine 207 includes: a rotor having blades (rotor blades) 214 that are provided on the outer circumference of each of rotary drums 210, 211, 212, and 213 and are circumferentially spaced apart from each other; and a stator having vanes (not shown in Figure) that are provided on the inner circumference of each of annular casings 215, 216, 217, and 218 as a base and are circumferentially spaced apart from each other.

In the fan/low-pressure compressor 202 and the high-pressure compressor 204, a working fluid flows in a passage between the rotary drums 210 and 211 and the casings 215 and 216 along the axial direction, and the pressure thereof increases along the flow direction. In the high-pressure turbine 206 and the low-pressure turbine 207, the working fluid flows in a passage between the rotary drums 212 and 213 and the casings 217 and 218 along the axial direction, and the pressure thereof decreases along the flow direction.

The above-described damper element of the present invention can be applied to, for example, bearings 250 of the rotary drums 210, 211, 212, 213. According to the gas-turbine engine, due to the damping effect, high performance can be obtained.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

## Claims

1. A bearing damper element that is disposed between a rotating object and a supporting object, the damper element comprising:
a slit that is disposed between an inner surface and an outer surface of an annulus and is extended substantially along a circumferential direction of the annulus at least over one round, the annulus being supported by the supporting object, one end of the slit being positioned between the inner surface and the outer surface of the annulus, another end of the slit being open at the inner surface or the outer surface of the annulus; and
a viscous fluid that is filled in the slit.

2. The damper element according to Claim 1, wherein the annulus is an outer ring or an inner ring of a rolling element bearing.

3. The damper element according to Claim 1, wherein the annulus is a plane bearing.

4. The damper element according to Claim 1, wherein the annulus is a member that is disposed inside or outside a rolling element bearing or a plane bearing.

5. The damper element according to Claim 1, wherein the slit is formed with a wire cut discharge processing or a laser processing.

6. The damper element according to Claim 5, wherein, in the wire cut discharge processing, a wire is inserted from the outer surface or the inner surface of the annular.

7. The damper element according to Claim 6, wherein both an attachment position and a detachment position of the wire are at the same position on the outer surface or the inner surface of the annular.

8. The damper element according to Claim 7, wherein the wire, which has been inserted into the annular, travels along a reverse direction after the formation of the slit and then is detached from the annular.

9. The damper element according to Claim 1, wherein the annular comprises a fluid inlet via which the viscous liquid is supplied into the slit.

10. The damper element according to Claim 1, further comprising: a sealing member that is disposed adjacent to an open end of the slit and suppresses an outflow of the viscous liquid.

11. A damper element comprising:
a slit that is disposed between an inner surface and an outer surface of an outer ring of a rolling element bearing and comprises a shape extending at least substantially along a circumferential direction, a part of the slit being open at at least one of a side surface and the outer surface of the outer ring; and
a viscous fluid that is filled in the slit.

12. The damper element according to Claim 11, wherein the slit is disposed between the inner surface and the outer surface of the outer ring and comprises a plurality of slits that are discontinuous from each other.

13. The damper element according to Claim 11, wherein a radial thickness of the outer ring of the rolling element bearing is greater than that of an inner ring.

14. The damper element according to Claim 11, wherein an axial length of the outer ring of the rolling element bearing is greater than that of a inner ring.

15. A bearing that comprises the damper element according to Claim 1.

16. A bearing that comprises the damper element according to Claim 11.

17. A gas-turbine engine that comprises the damper element according to Claim 1.

18. A gas-turbine engine that comprises the damper element according to Claim 11.

19. A fabricating method of a damper element for a bearing that is disposed between a rotating object and a supporting object, the method comprising:
forming a slit between an inner surface and an outer surface of an annular that is supported by the supporting object, the slit extending at least substantially along a circumferential direction of the annular.

20. The fabricating method of the bearing damper element according to Claim 19, wherein the formation of the slit comprising using a wire cut discharge processing or a laser processing.

21. The fabricating method of the bearing damper element according to Claim 20, wherein the formation of the slit further comprising inserting the wire from the outer surface or the inner surface of the annular.

22. The fabricating method of the bearing damper element according to Claim 21, wherein both an attachment position and a detachment position of the wire are at the same position on the outer surface or the inner surface of the annular.

23. The fabricating method of the bearing damper element according to Claim 22, wherein the formation of the slit further comprising moving the wire along a reverse direction after the formation of the slit and detaching the wire from the annular.

24. The fabricating method of the bearing damper according to Claim 19, further comprising filling a viscous liquid into the slit.
